(19) Europäisches Patentamt
European Patent Office
Office européen des brevets

(11) Publication number: **0 307 488 B1**

(12) **EUROPEAN PATENT SPECIFICATION**

(45) Date of publication of patent specification: **22.07.92**

(51) Int. Cl.5: **C08L 25/00**, C08L 101/00, C08K 3/00, C08K 13/02, //(C08K13/02,3:00,5:13,5:52)

(21) Application number: **87113456.5**

(22) Date of filing: **15.09.87**

The file contains technical information submitted after the application was filed and not included in this specification

(54) **A polystyrene-based resin composition.**

(43) Date of publication of application: **22.03.89 Bulletin 89/12**

(45) Publication of the grant of the patent: **22.07.92 Bulletin 92/30**

(84) Designated Contracting States: **BE CH DE FR GB IT LI NL SE**

(56) References cited:
**EP-A- 0 224 097**
**GB-A- 801 555**

**PATENT ABSTRACTS OF JAPAN, vol. 6, no. 35 (C-93)[913], 3rd March 1982**

**MAKROMOL. CHEM., vol. 182, 8th August 1981, pages 2259-2266, Basel, CH; H. SATO et al.: "Gel chromatographic fractionation of styrene oligomers"**

**MACROMOLECULES, vol. 16, no. 4, April 1983, pages 604-607, American Chemical Society, Columbus, US; A.E. TONELLI: "Stereosequence-dependent 13C NMR chemical shifts in polystyrene"**

(73) Proprietor: **IDEMITSU KOSAN COMPANY LIMITED**
**1-1, Marunouchi 3-chome Chiyoda-ku**
**Tokyo(JP)**

(72) Inventor: **Kuramoto, Masahiko IDEMITSU KOSAN COMPANY LTD.**
**No. 1280, Kamiizumi Sodegaura-machi**
**Kimitsu-gun Chiba-ken(JP)**
Inventor: **Nakano, Akikazu IDEMITSU KOSAN COMPANY LTD.**
**No. 1280, Kamiizumi Sodegaura-machi**
**Kimitsu-gun Chiba-ken(JP)**
Inventor: **Suzuki, Masakazu IDEMITSU KOSAN COMPANY LTD**
**No. 1280, Kamiizumi Sodegaura-machi**
**Kimitsu-gun Chiba-ken(JP)**
Inventor: **Sawada, Michihiro IDEMITSU KOSAN COMPANY LTD**
**No. 1280, Kamiizumi Sodegaura-machi**
**Kimitsu-gun Chiba-ken(JP)**

(74) Representative: **Türk, Gille, Hrabal**
**Brucknerstrasse 20**
**W-4000 Düsseldorf 13(DE)**

**EP 0 307 488 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

As is well known, polymers of styrene widely under practical use are usually obtained by the free-radical polymerization and they have an atactic structure in respect of the stereospecificity of the molecular structure. These styrene-based resins, however, are not quite satisfactory in their relatively poor heat resistance and mechanical strengths. The inventors have continued extensive investigations to obtain a styrene-based resin freed from the disadvantages of conventional styrene-based resins and arrived at a discovery that the requirement can well be satisfied by using a styrene-based resin of which the molecular structure relative to the stereospecificity is mainly syndiotactic. While such a styrene-based polymer having a mainly syndiotactic molecular structure relative to the stereospecificity, which is referred to as a syndiotactic polystyrene hereinbelow, has as such excellent heat resistance in comparison with conventional polystyrenes having an atactic molecular structure, various other properties of the resin should desirably be improved in order that the resin is very useful in a wide variety of applications.

### SUMMARY OF THE INVENTION

The present invention accordingly has an object to provide a resin composition based on a syndiotactic polystyrene and having greatly improved properties to be freed from the disadvantages of conventional styrene-based resin compositions.

The polystyrene-based resin composition of the present invention comprises:

(a) a styrene-based polymer of which the molecular structure relative to the stereospecificity is mainly syndiotactic; and

(b) an additive selected from the group consisting of thermoplastic resins excluding of the styrene-based polymer of which the molecular structure relative to the stereospecificity is mainly syndiotactic (referred to as "thermoplastic resins" hereinunder) and inorganic fillers.

Namely, the present invention proposes, on one hand, to compound a syndiotactic polystyrene with a thermoplastic resin such as polycarbonate resins so that the resultant polystyrene-based resin composition is imparted with greatly improved heat resistance, mechanical strengths and other properties in good balance as a useful molding resin composition. The invention proposes, on the other hand, to compound a syndiotactic polystyrene with an inorganic filler such as glass fibers, optionally, in combination with a thermoplastic resin so that the resultant resin composition is imparted with further improved heat resistance and mechanical strengths to satisfy the requirements for molding resin compositions.

### DETAILED DESCRIPTION OF THE PREFERRED EMBODIMENTS

The syndiotactic polystyrene implied in the present invention is a polymer of styrene of which the molecular structure relative to the stereospecificity is mainly syndiotactic or, in other words, a polymer of styrene in which the phenyl or substituted phenyl groups as the pendant groups to the main chain of the polymeric structure are positioned alternately to the reverse directions relative to the carbon-to-carbon linkages in the polymeric main chain. The tacticity thereof can be quantitatively determined by the nuclear magnetic resonance absorption spectrometric method, referred to as the NMR method hereinbelow.

The tacticity determined by the NMR method can be expressed by the proportion of a plural number of the structural units existing in consecutive sequence such as diads, triads and pentads for two, three and five structural units, respectively. The tacticity of the syndiotactic polystyrene as the component (a) of the inventive resin composition should be at least 85% and at least 50% for the diads and pentads, respectively. The polystyrene having such a stereospecificity is not limited to homopolymeric polystyrenes but includes poly(alkyl styrenes), poly(halogenated styrenes), poly(alkoxy styrenes), poly(styrene carboxylates) and mixtures thereof as well as copolymers mainly composed thereof. Exemplary of the poly(alkyl styrenes), poly(halogenated styrenes) and poly(alkoxy styrenes) are: poly(methyl styrene), poly(ethyl styrene), poly(isopropyl styrene) and poly(tert-butyl styrene); poly(chlorostyrene) and poly(bromostyrene); and poly(methoxy styrene), poly(ethoxy styrene), respectively.

The syndiotactic polystyrene of the present invention has a weight-average molecular weight of at least 100,000, preferably at least 200,000. When said molecular weight is smaller than 100,000, the resin composition with sufficient heat resistance and mechanical strength can not be obtained.

When the polystyrene-based resin composition of the invention is composed of the syndiotactic polystyrene and a thermoplastic resin, the amount of the syndiotactic polystyrene in the resin composition

should be in the range from 1 to 99% by weight, preferably from 5 to 95% by weight. When the amount thereof is smaller than 1% by weight, the desired effect cannot be fully exhibited in the improvement of the heat resistance of the thermoplastic resin while an amount thereof larger than 99% by weight results in the loss of the object of the present invention to improve the heat resistance of thermoplastic resins in general.

The basic ingredient of the inventive resin composition is an ordinary thermoplastic resin other than the above mentioned styrene-based polymers having a syndiotactic molecular structure. The thermoplastic resin is selected from a variety of thermoplastic resins depending on the intended application of the resin composition. The thermoplastic resin are selected from the group consisting of styrene-based polymers and copolymers selected from the group consisting of polystyrenes having an atactic molecular structure, polystyrenes having an isotactic molecular structure, AS resins, ABS resins, SBS resins and SEBS resins; condensation-polymerized polymers selected from the group consisting of polyesters, polycarbonates, polyethers, polyamides; acrylic polymers selected from the group consisting of poly(acrylic acid), poly-(acrylic acid esters), poly(methyl methacrylate); polypropylene, polybutene, poly(4-methylpentene-1), copolymers of ethylene and propylene.

The alternative additive ingredient in the inventive resin composition is an inorganic filler which is not limited to a specific one but can be selected from a variety of known inorganic fillers depending on the intended application of the resin composition. Exemplary of suitable inorganic fillers are glass fibers, carbon fibers, alumina fibers, carbon black, graphite, titanium dioxide, silica, talc, mica, asbestos, calcium carbonate, calcium sulfate, barium carbonate, magnesiun carbonate, tin oxide, alumina, kaolin, silicon carbide and metal powders. These inorganic fillers can be used either singly or as a combination of two kinds or more according to need.

When the inventive resin composition is composed of the syndiotactic polystyrene and the inorganic filler, the weight ratio of the syndiotactic polystyrene to the inorganic filler should be in the range from 15:85 to 99:1 or, preferably, from 50:50 to 95:5.

Further, when the inventive resin composition comprises the syndiotactic polystyrene, the thermoplastic resin and the inorganic filler, the formulation of the composition should contain from 5 to 50 parts by weight of the inorganic filler per 95 to 50 parts by weight of the total amount of the syndiotactic polystyrene and the thermoplastic resin.

The compounding work of the above described components to prepare the inventive resin composition can be performed by using a conventional blending machine such as a Banbury mixer, Henschel mixer and roller mill. It is of course optional that the resin composition is prepared by the solution blending method.

The blending work of the components should be performed at an elevated temperature so that heat stabilizers conventionally used in the compounding works of atactic polystyrenes cannot be used due to the dissipation and thermal decomposition. Instead, the object of heat-stabilization of the inventive resin composition can be achieved by admixing the resin composition with from 0.005 to 5 parts by weight or, preferably, from 0.01 to 1 part by weight, per 100 parts by weight of the resinous ingredients, of a combination of a phenolic antioxidant and a phosphorus compound represented by the general formula

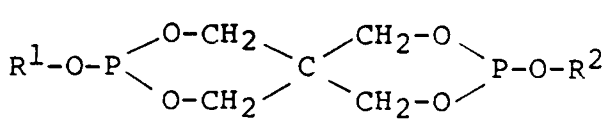 ,

in which $R^1$ and $R^2$ are each, independently from the other, a monovalent hydrocarbon group selected from the class consisting of alkyl groups having 1 to 20 carbon atoms, cycloalkyl groups having 3 to 30 carbon atoms and aryl groups having 6 to 20 carbon atoms. The weight ratio of the phosphorus compound to the phenolic antioxidant should usually be in the range from 100:1 to 1:1 or, preferably, from 10:1 to 2:1.

Exemplary of the above mentioned phosphorus compound are distearyl pentaerithritol diphosphite, dioctyl pentaerithritol diphosphite, diphenyl pentaerithritol diphosphite, bis(2,4-di-tert-butyl phenyl) pentaerithritol diphosphite, bis(2,6-di-tert-butyl-4-methyl phenyl) pentaerithritol diphosphite and dicyclohexyl pentaerithritol diphosphite.

The phenolic antioxidant can be any of knwon ones exemplified by 2,6-di-tert-butyl-4-methyl phenol, 2,6-diphenyl-4-methoxy phenol, 2,2′-methylene bis(6-tert-butyl-4-methyl phenol), 2,2′-methylene bis(6-tert-butyl-4-ethyl phenol), 2,2′-methylene bis[4-methyl-6-(α-methyl cyclohexyl) phenol], 1,1-bis(5-tert-butyl-4-hydroxy-2-methyl phenyl) butane, 2,2′-methylene bis(4-methyl-6-cyclohexyl phenol), 2,2′-methylene bis(4-methyl-6-nonyl phenol), 1,1,3-tris(5-tert-butyl-4-hydroxy-2-methyl phenyl) butane, 2,2-bis(5-tert-butyl-4-hydroxy-2-methyl phenyl 4-n-dodecyl mercapto butane, ethylene glycol bis[3,3-bis(3-tert-butyl-4-hydroxy phenyl) butyrate], 1,1-bis(3,5-dimethyl-2-hydroxy phenyl)-3-(n-dodecylthio) butane, 4,4′-thio-bis(6-tert-butyl-3-methyl phenol), 1,3,5-tris(3,5-di-tert-butyl-4-hydroxy benzyl)-2,4,6-trimethyl benzene, 2,2-bis(3,5-di-tert-butyl-4-hydroxy benzyl) malonic acid octadecyl ester, n-octadecyl 3-(4-hydroxy-3,5-di-tert-butyl phenyl) propionate and tetrakis[methylene(3,5-di-tert-butyl-4-hydroxy hydrocinnamate)]methane.

When the inventive resin composition is prepared by compounding an inorganic filler having electroconductivity, such as carbon black and graphite in an amount of 10 to 60% by weight based on the overall amount of the resin composition with thorough mixing, the resultant resin composition can be a heat-sensitive resistive composition having a positive temperature coefficient. It is preferable that the electroconductive inorganic filler such as carbon black used in the above mentioned object has a particle diameter in the range from 10 to 200 nm.

The thus obtained resin composition has greatly improved properties in the heat resistance and mechanical strengths as compared to the polystyrene-based resin compositions conventionally used in various applications. Accordingly, the resin composition of the invention is useful in a wide field of applications as a material for various industrial uses and a material of various machines and instruments in which heat resistance and mechanical strengths higher than conventional are essential.

In the following, the polystyrene-based resin composition of the invention is described in more detail by way of examples and comparative examples.

Polymer Preparation 1.
Preparation of a polystyrene resin having a mainly syndiotactic molecular structure.

Into a solution of 20 m moles of cyclopentadienyl titanium trichloride and 0.8 mole as aluminum atoms of methyl aluminoxane as the catalyst constituents dissolved in 2 liters of toluene were added 3.6 liters of styrene and the polymerization of styrene was performed at 20 °C for 1 hour. After completion of the polymerization reaction, the reaction product was washed with a mixture of hydrochloric acid and methyl alcohol to decompose and remove the catalyst constituents followed by drying to give 330 g of dried polymeric product.

The polymeric product was then subjected to extraction with methyl ethyl ketone as the extraction solvent using a Soxhlet extractor. The amount of the polymer remaining as unextracted was 95% by weight of the amount before extraction. This polymer had a weight-average molecular weight of about 280,000, number-average molecular weight of about 57,000 and melting point of 270 °C. The NMR analysis of this polymer utilizing the $^{13}C$ carbon isotope indicated that the NMR absorption spectrum had a peak of absorption at 145.35 ppm which could be assigned to the syndiotactic molecular structure of polystyrene. Calculation from the area of this peak gave a result that the polymer had a syndiotactivity of 96% in pentads (refer to H. Sato & Y. Tanaka, J. Polym. Sci., Polym. Phys. Ed. 21, 1667-1674 (1983)).

Polymer Preparation 2.
Preparation of a polystyrene resin having a mainly syndiotactic molecular structure.

Into a solution of 13.4 m moles of titanium tetraethoxide and 1340 m moles as aluminum atoms of methyl aluminoxane as the catalyst constituents dissolved in 1.2 liters of toluene were added 33 liters of styrene and the polymerization reaction was performed for 1.5 hours at 55 °C. After completion of the polymerization reaction, the reaction product was washed with a mixture of hydrochloric acid and methyl alcohol to decompose and remove the catalyst constituents followed by drying to give 3.5 kg of a dried polymeric product.

The polymeric product was then subjected to extraction with methyl ethyl ketone as the extraction solvent using a Soxhlet extractor. The amount of the polymer remaining unextracted was 95% by weight of the amount before extraction. This polymer had a weight-average molecular weight of about 800,000, number-average molecular weight of about 26,700 and melting point of 270 °C. The NMR analysis of this polymer utilizing the $^{13}C$ carbon isotope indicated that the NMR absorption spectrum had a peak of absorption at 145.35 ppm which could be assigned to the syndiotactic molecular structure of polystyrene. Calculation from the area of this peak gave a result that the polymer had a syndiotacticity of 97% in pentads.

Example 1

A resin composition was prepared by compounding 80 parts by weight of a polycarbonate resin

(Idemitsu Polycarbonate A2500, a product by Idemitsu Petrochemical Co.) as a thermoplastic resin and 20 parts by weight of the syndiotactic polystyrene obtained in Polymer Preparation 1 described above. The resin composition was shaped by using a Minimat molding machine into test specimens of which the mechanical strengths as well as the Vicat softening point as a thermal property were measured to give the results shown in Table 1.

Example 2

The same experimental procedure as in Example 1 was undertaken except that the blending ratio of the polycarbonate resin and the syndiotactic polystyrene was 50:50 by weight instead of 80:20 by weight. The results of the experiment are also shown in Table 1.

Example 3

The same experimental procedure as in Example 1 was undertaken except that the blending ratio of the polycarbonate resin and the syndiotactic polystyrene was 20:80 by weight instead of 80:20 by weight. The results of the experiment are also shown in Table 1.

Example 4

The same experimental procedure as in Example 1 was undertaken except that the polycarbonate resin as a thermoplastic resin was replaced with the same amount of a polyethylene terephthalate resin (Pyropet RY 533, a product by Toyo Boseki Co.). The results of the experiment are also shown in Table 1.

Example 5

The same experimental procedure as in Example 4 was undertaken except that the blending ratio of the polyethylene terephthalate resin and the syndiotactic polystyrene was 50:50 by weight instead of 80:20 by weight. The results of the experiment are also shown in Table 1.

Example 6

The same experimental procedure as in Example 1 was undertaken except that the polycarbonate resin was replaced with the same amount of an ABS resin (JSR ABS 15, a product by Japan Synthetic Rubber Co.). The results of the experiment are also shown in Table 1.

Example 7

The same experimental procedure as in Example 6 was undertaken except that the blending ratio of the ABS resin and the syndiotactic polystyrene was 50:50 by weight instead of 80:20 by weight. The results of the experiment are also shown in Table 1.

Example 8

The same experimental procedure as in Example 1 was undertaken except that the polycarbonate resin was replaced with the same amount of a polysulfone resin (Udel Polysulfone P-1700, a product by Union Carbide Corp.). The results of the experiment are also shown in Table 1.

Example 9

The same experimental procedure as in Example 8 was undertaken except that the blending ratio of the polysulfone resin and the syndiotactic polystyrene was 50:50 by weight instead of 80:20 by weight. The results of the experiment are also shown in Table 1.

Comparative Examples 1 to 4

Without blending with the syndiotactic polystyrene, measurement of the properties was undertaken of each of the polycarbonate resin, polyethylene terephthalate resin, ABS resin and polysulfone resin used in

the preceding examples in Comparative Examples 1, 2, 3 and 4, respectively. The results of the measurements are also shown in Table 1.

Table 1

| | Tensile strength, kg/cm² | Ultimate elongation, % | Elastic modulus, kg/cm² | Vicat softening point, °C |
|---|---|---|---|---|
| Example 1 | 600 | 4.5 | 21,800 | 170 |
| 2 | 610 | 4.1 | 29,200 | 190 |
| 3 | 620 | 10.0 | 32,500 | 200< |
| 4 | 650 | 2.8 | 28,200 | 200< |
| 5 | 580 | 2.6 | 29,200 | 200< |
| 6 | 520 | 2.6 | 22,500 | 150 |
| 7 | 560 | 2.5 | 26,000 | 180 |
| 8 | 650 | 3.5 | 25,900 | 200< |
| 9 | 490 | 3.0 | 28,300 | 200< |
| Comparative Example 1 | 590 | 120 | 15,200 | 150 |
| 2 | 710 | 7.6 | 26,900 | 200< |
| 3 | 500 | 15.3 | 20,300 | 110 |
| 4 | 710 | 60 | 21,700 | 190 |

Example 10

A resin compound was prepared by blending, in a Henschel mixer, 80 parts by weight of the syndiotactic polystyrene obtained in Polymer Preparation 2 described above, 20 parts by weight of chopped glass fibers having an average fiber length of 3 mm (a product by Asahi Fiber Glass Co.), 0.5 part by weight of bis(2,4-di-tert-butyl phenyl) pentaerithritol diphosphite and 0.2 part by weight of n-octadecyl 3-(4-hydroxy-2,5-dibutyl phenyl)propionate and the resin compound was pelletized by kneading in and extruding out of an extruder machine. The pelletized resin compound was molded into test specimens of which the mechanical strengths were measured to give results including 1050 kg/cm$^2$ of tensile strength, 1490 kg/cm$^2$ of flexural strength and 98,000 kg,/cm$^2$ of elastic modulus of bending. The heat distortion temperature of the test specimens was 250 ° C.

Example 11

The same experimental procedure as in Example 10 was undertaken except that the blending ratio of the syndiotactic polystyrene and chopped glass fibers was 70:30 by weight instead of 80:20. The test specimens prepared from the resin compound had properties including 1120 kg/cm$^2$ of tensile strength, 1600 kg/cm$^2$ of flexural strength, 104,000 kg/cm$^2$ of elastic modulus of bending and 250 ° C of heat distortion temperature.

Example 12

The same experimental procedure as in Example 10 was undertaken except that the chopped glass fibers as an inorganic filler were replaced with the same amount of chopped carbon fibers having a diameter of 9 µm and an average fiber length of 3 mm. The test specimens prepared from the resin compound had properties including 1100 kg/cm$^2$ of tensile strength, 1500 kg/cm$^2$ of flexural strength, 90,000 kg/cm$^2$ of elastic modulus of bending and 250 °C of heat distortion temperature.

Example 13

The same experimental procedure as in Example 12 was undertaken except that the blending ratio of the syndiotactic polystyrene and the chopped carbon fibers was 70:30 by weight instead of 80:20. The test specimens prepared from the resin compound had properties including 1200 kg/cm$^2$ of tensile strength, 1600 kg/cm$^2$ of flexural strength, 90,000 kg/cm$^2$ of elastic modulus of bending and 250 °C of heat distortion temperature.

Example 14

The same experimental procedure as in Example 10 was undertaken except that the chopped glass fibers as an inorganic filler were replaced with the same amount of pulverrized mica having a fineness of 60 mesh or finer by the Tyler standard. The test specimens prepared from the resin compound had a heat distortion temperature of 230 °C.

Example 15

The same experimental procedure as in Example 14 was undertaken except that the blending ratio of the syndiotactic polystyrene and the mica powder was 50:50 by weight. The test specimens prepared from the resin compound had a heat distortion temperature of 250 °C.

Comparative Example 5

The same experimental procedure as in Example 10 was undertaken except that the syndiotactic polystyrene was replaced with the same amount of a commercial product of polystyrene resin having an atactic structure of the polymer in the stereospecificity and a weight-average molecular weight of about 300,000 (a product by Idemitsu Petrochemical Co.). The test specimens prepared from the resin compound had properties including 650 kg/cm$^2$ of tensile strength, 690 kg/cm$^2$ of flexural strength, 36,000 kg/cm$^2$ of elastic modulus of bending and 110 °C of heat distortion temperature.

Example 16

A resin compound was prepared by blending, in a Henschel mixer, 40 parts by weight of the syndiotactic polystyrene obtained in Polymer Preparation 2 described above, 40 parts by weight of a commercial product of a polystyrene resin having an atactic molecular structure as a thermoplastic resin (Idemitsu Styrol US 315, a product by Idemitsu Petrochemical Co.), 20 parts by weight of chopped glass fibers having an average fiber length of 3 mm (a product by Asahi Fiber Glass Co.), 0.5 part by weight of bis(2,4-di-tert-butyl phenyl) pentaerithritol diphosphite and 0.2 part by weight of tetrakis[methylene (3,5-di-tert-butyl-4-hydroxy hydrocinnamate)] methane and the resin compound was pelletized by kneading in and extruding out of an extruder machine. The pelletized resin compound was shaped into test specimens of which the mechanical and thermal properties were measured to give the results shown in Table 2 below.

Examples 17 to 20

The same experimental procedure as in Example 16 was undertaken in each of Examples 17 to 20 except that the atactic polystyrene used as a thermoplastic resin was replaced each with the same amount of the polycarbonate resin used in Example 1, the polyethylene terephthalate resin used in Example 4, the ABS resin used in Example 6 and the polysulfone resin used in Example 8, respectively. Table 2 also shows the mechanical and thermal properties of the test specimens prepared from the resin compounds.

Table 2

| Example No. | Tensile strength, $kg/cm^2$ | Ultimate elongation, % | Elastic modulus, $kg/cm^2$ | Vicat softening point, °C |
|---|---|---|---|---|
| 16 | 870 | 1.3 | 80,000 | 200< |
| 17 | 920 | 2.0 | 105,000 | 200< |
| 18 | 950 | 1.4 | 110,000 | 200< |
| 19 | 840 | 1.4 | 94,000 | 200< |
| 20 | 740 | 1.6 | 102,000 | 200< |

Example 21

A resin compound was prepared, in a Labo-plastomill, by blending 60 parts by weight of the syndiotactic polystyrene prepared in Polymer Preparation 2 described above and 40 parts by weight of carbon black having an average particle diameter of 43 nm (Diablack E, a product by Mitsubishi Chemical Industry Co.) and kneading the blend at 295 °C for 20 minutes. The resin compound was pelletized and then compression-molded into a sheet in a compression molding machine at 300 °C under a pressure of 150 $kg/cm^2$ taking 10 minutes.

The thus prepared resin sheet was sandwiched between two foils of electrolytic nickel and pressed under the same conditions as above so that the nickel foils were bonded to and integrated with the resin sheet to give a laminated sheet having a thickness of 1 mm. Test pieces of each 1 cm by 1 cm wide were prepared by cutting the laminated sheet and subjected to the measurement of the electric properties utilizing the two nickel foils on both sides of the resin sheet as the electrodes.

The electrical measurement gave a result that the specific resistance of the resin sheet was 1.0 ohm•cm at room temperature. The specific resistance showed a rapid increase by temperature elevation at 280 °C to give a value which was larger than that at room temperature by $10^{2.5}$ times. The characteristic of power consumption as a heater element was examined to find that the heat evolution corresponded to 2.4 watts in the steady-value region where the product of the current and voltage had a constant value.

**Claims**

**1.** A polystyrene-based resin composition which comprises:

(a) a styrene-based polymer the molecular structure of which, relative to the stereospecificity, is mainly syndiotactic; and

(b) an additive selected from the group consisting of thermoplastic resins

selected from the group consisting of styrene-based polymers and copolymers selected from the group consisting of polystyrenes having an atactic molecular structure, polystyrenes having an isotactic molecular structure, AS resins, ABS resins, SBS resins and SEBS resins; condensation-polymerized polymers selected from the group consisting of polyesters, polycarbonates, polyethers and polyamides; acrylic polymers selected from the group consisting of poly(acrylic acid), poly-(acrylic acid ester) and poly(methyl methacrylate); polypropylene, polybutene, poly(4-methylpentene-1) and copolymers of ethylene and propylene,

and inorganic fillers.

**2.** The polystyrene-based resin composition as claimed in claim 1 wherein the styrene-based polymer as the component (a) has a tacticity of at least 85% in diads or at least 50% in pentads as measured by the method of nuclear magnetic absorption spectroscopy.

**3.** The polystyrene-based resin composition as claimed in claim 1 wherein the styrene-based polymer as

the component (a) has a weight-average molecular weight of at least 100,000.

**4.** The polystyrene-based resin composition as claimed in claim 1 wherein the styrene-based polymer as the component (a) is a polymer of a monomer selected from the group consisting of styrene, alkyl styrenes, halogenated styrenes and alkoxy styrenes.

**5.** The polystyrene-based resin composition as claimed in claim 1 wherein the amount of the thermoplastic resin as the component (b) is in the range from 99 to 1 part by weight per 1 to 99 parts by weight of the styrene-based polymer as the component (a).

**6.** The polystyrene-based resin composition as claimed in claim 5 wherein the amount of the thermoplastic resin as the component (b) is in the range from 95 to 5 parts by weight per 5 to 95 parts by weight of the styrene-based polymer as the component (a).

**7.** The polystyrene-based resin composition as claimed in claim 1 wherein the amount of the inorganic filler as the component (b) is in the range from 85 to 1 part by weight per 15 to 99 parts by weight of the styrene-based polymer as the component (a).

**8.** The polystyrene-based resin composition as claimed in claim 7 wherein the amount of the inorganic filler as the component (b) is in the range from 50 to 5 parts by weight per 50 to 95 parts by weight of the styrene-based polymer as the component (a).

**9.** The polystyrene-based resin composition as claimed in claim 1 wherein the styrene-based polymer as the component (a) is compounded with the thermoplastic resin as the component (b) and the inorganic filler as the component (b) in such a ratio that the amount of the inorganic filler as the component (b) is in the range from 50 to 5 parts by weight per 50 to 95 parts by weight of the total amount of the styrene-based polymer as the component (a) and the thermoplastic resin as the component (b).

**10.** The polystyrene-based resin composition as claimed in claim 1 which further comprises:
(c) a pentaerithritol diphosphite represented by the general formula

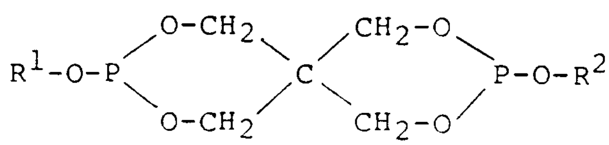 ,

in which $R^1$ and $R^2$ are each, independently from the other, a monovalent hydrocarbon group selected from the group consisting of alkyl groups having 1 to 20 carbon atoms, cycloalkyl groups having 3 to 20 carbon atoms and aryl groups having 6 to 20 carbon atoms; and
(d) a phenolic antioxidant.

**Revendications**

**1.** Composition de résine à base de polystyrène, comprenant:
(a) un polymère à base de styrène, dont la structure moléculaire eu égard à la stéréospécificité est essentiellement syndiotactique; et
(b) un additif choisi parmi des résines thermoplastiques, choisies parmi des polymères et copolymères à base de styrène choisis parmi des polystyrènes ayant une structure moléculaire atactique, des polystyrènes ayant une structure moléculaire isotactique, des résines AS, des résines ABS, des résines SBS et des résines SEBS; des polymères de polycondensation choisis parmi des polyesters, polycarbonates, polyéthers et polyamides; des polymères acryliques choisis parmi le poly-(acide acrylique), des poly(ester d'acide acrylique)s et le poly(méthacrylate de méthyle); le polypropylène, le polybutène, le poly(4-méthylpentène-1)etdes copolymères d'éthylène et de propylène, et des charges minérales.

**2.** Composition de résine à base de polystyrène selon la revendication 1, dans laquelle le polymère à

base de styrène, en tant que composant (a), a une tacticité d'au moins 85 % en diades ou d'au moins 50 % en pentades, telle que mesurée par la méthode de spectroscopie d'absorption magnétique nucléaire.

**3.** Composition de résine à base de polystyrène selon la revendication 1, dans laquelle le polymère à base de styrène, en tant que composant (a), a une masse moléculaire moyenne en poids d'au moins 100 000.

**4.** Composition de résine à base de polystyrène selon la revendication 1, dans laquelle le polymère à base de styrène, en tant que composant (a), est un polymère d'un monomère choisi parmi le styrène, des alkylstyrènes, des styrènes halogénés et des alcoxystyrènes.

**5.** Composition de résine à base de polystyrène selon la revendication 1, dans laquelle la quantité de la résine thermoplastique, en tant que composant (b), est dans la plage allant de 99 à 1 partie en poids pour 1 à 99 parties en poids du polymère à base de styrène en tant que composant (a).

**6.** Composition de résine à base de polystyrène selon la revendication 5, dans laquelle la quantité de la résine thermoplastique, en tant que composant (b), est dans la plage allant de 95 à 5 parties en poids pour 5 à 95 parties en poids du polymère à base de styrène, en tant que composant (a).

**7.** Composition de résine à base de polystyrène selon la revendication 1, dans laquelle la quantité de la charge minérale, en tant que composant (b), est dans la plage allant de 85 à 1 partie en poids pour 15 à 99 parties en poids du polymère à base de styrène en tant que composant (a).

**8.** Composition de résine à base de polystyrène selon la revendication 7, dans laquelle la quantité de la charge minérale, en tant que composant (b), est dans la plage allant de 50 à 5 parties en poids pour 50 à 95 parties en poids du polymère à base de styrène en tant que composant (a).

**9.** Composition de résine à base de polystyrène selon la revendication 1, dans laquelle le polymère à base de styrène, en tant que composant (a), est mélangé avec la résine thermoplastique, en tant que composant (b), et la charge minérale, en tant que composant (b), en un rapport tel que la quantité de la charge minérale, en tant que composant (b), est dans la plage allant de 50 à 5 parties en poids pour 50 à 95 parties en poids de la quantité totale du polymère à base de styrène, en tant que composant (a), et de la résine thermoplastique, en tant que composant (b).

**10.** Composition de résine à base de polystyrène selon la revendication 1, comprenant en outre:
(c) un diphosphite de pentaérythritol représenté par la formule générale

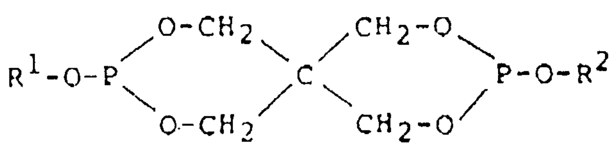 ,

dans laquelle $R^1$ et $R^2$ sont chacun, indépendamment l'un de l'autre, un groupe hydrocarboné monovalent choisi parmi des groupes alkyle ayant de 1 à 20 atomes de carbone, des groupes cycloalkyle ayant de 3 à 20 atomes de carbone et des groupes aryle ayant de 6 à 20 atomes de carbone; et
(d) un antioxydant phénolique.

**Patentansprüche**

**1.** Harzzusammensetzung auf Polystyrol-Basis, die umfaßt:
a) ein Polymer auf Styrol-Basis, dessen Molekülstruktur, bezogen auf die Stereospezifität, hauptsächlich syndiotaktisch ist; und
b) einen Zusatz (ein Additiv), ausgewählt aus der Gruppe, die besteht aus thermoplastischen Harzen, ausgewählt aus der Gruppe, die besteht aus Polymeren auf Styrol-Basis und Copolymeren, ausgewählt aus der Gruppe, die besteht aus Polystyrolen mit einer ataktischen Molekülstruktur, Polystyrolen mit einer isotaktischen Molekülstruktur, AS-Harzen, ABS-Harzen, SBS-Harzen und SEBS-Harzen; kondensationspolymerisierten Polymeren, ausgewählt aus der Gruppe, die besteht aus Polyestern, Polycarbonaten, Polyäthern und Polyamiden; Acrylpolymeren, ausgewählt aus der Gruppe, die besteht aus Poly(acrylsäure), Poly(acrylsäureester) und Poly(methylmethacrylat); Polypropylen, Polybuten, Poly(4-methylpenten-1) und Copolymeren von Ethylen und Propylen und anorganischen Füllstoffen.

**2.** Harzzusammensetzung auf Polystyrol-Basis nach Anspruch 1, in der das Polymer auf Styrol-Basis als Komponente (a) eine Taktizität von mindestens 85 % in Form von Diaden oder von mindestens 50 % in Form von Pentaden aufweist, bestimmt nach dem kernmagnetischen Absorptionsspektroskopie-Verfahren.

**3.** Harzzusammensetzung auf Polystyrol-Basis nach Anspruch 1, in der das Polymer auf Styrol-Basis als Komponente (a) ein gewichtsdurchschnittliches Molekulargewicht von mindestens 100 000 hat.

**4.** Harzzusammensetzung auf Polystyrol-Basis nach Anspruch 1, in der das Polymer auf Styrol-Basis als Komponente (a) ein Polymer eines Monomers, ausgewählt aus der Gruppe, die besteht aus Styrol, Alkylstyrolen, halogenierten Styrolen und Alkoxystyrolen, ist.

**5.** Harzzusammensetzung auf Polystyrol-Basis nach Anspruch 1, in der die Menge des thermoplastischen Harzes als Komponente (b) in dem Bereich von 99 bis 1 Gew.-Teilen auf 1 bis 99 Gew.-Teile des Polymers auf Styrol-Basis als Komponente (a) liegt.

**6.** Harzzusammensetzung auf Polystyrol-Basis nach Anspruch 5, in der die Menge des thermoplastischen Harzes als Komponente (b) in dem Bereich von 95 bis 5 Gew.-Teilen auf 5 bis 95 Gew.-Teile des Polymers auf Styrol-Basis als Komponente (a) liegt.

**7.** Harzzusammensetzung auf Polystyrol-Basis nach Anspruch 1, in der die Menge des anorganischen Füllstoffs als Komponente (b) in dem Bereich von 85 bis 1 Gew.-Teil auf 15 bis 99 Gew.-Teile des Polymers auf Styrol-Basis als Komponente (a) liegt.

**8.** Harzzusammensetzung auf Polystyrol-Basis nach Anspruch 7, in der die Menge an anorganischem Füllstoff als Komponente (b) in dem Bereich von 50 bis 5 Gew.-Teilen auf 50 bis 95 Gew.-Teile des Polymers auf Styrol-Basis als Komponente (a) liegt.

**9.** Harzzusammensetzung auf Polystyrol-Basis nach Anspruch 1, in der das Polymer auf Styrol-Basis als Komponente (a) gemischt ist mit dem thermoplastischen Harz als Komponente (b) und dem anorganischen Füllstoff als Komponente (b) in einem solchen Verhältnis, daß die Menge des anorganischen Füllstoffs als Komponente (b) in dem Bereich von 50 bis 5 Gew.-Teilen auf 50 bis 95 Gew.-Teile der Gesamtmenge an Polymer auf Styrol-Basis als Komponente (a) und thermoplastischem Harz als Komponente (b) liegt.

**10.** Harzzusammensetzung auf Polystyrol-Basis nach Anspruch 1, die außerdem umfaßt:
(c) ein Pentaerythritdiphosphit der allgemeinen Formel

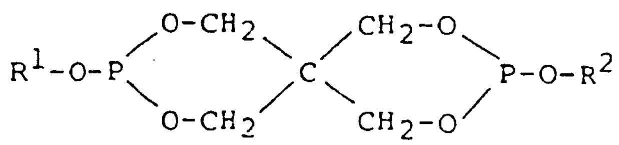

,

worin $R^1$ und $R^2$ jeweils unabhängig voneinander eine monovalente Kohlenwasserstoffgruppe, ausgewählt aus der Gruppe, die besteht aus Alkylgruppen mit 1 bis 20 Kohlenstoffatomen, Cycloalkylgruppen mit 3 bis 20 Kohlenstoffatomen und Arylgruppen mit 6 bis 20 Kohlenstoffatomen, bedeuten; und

(d) ein phenolisches Antioxidationsmittel.